# DEMANDE DE BREVET EUROPEEN

(11) **EP 0 644 671 A1**
(43) Date de publication de la demande: **22.03.1995**
(21) Numéro de dépôt: 94401960.3
(22) Date de dépôt: 02.09.1994
(51) Int. Cl.: H04J 3/06, H04J 3/14, H04Q 7/24

(54) **Radiotéléphone avec asservissement de l'horloge de réception borne ou poste en fonction d'une grandeur de qualité de réception**

(30) Priorité: 17.09.1993 FR 9311132
(71) Demandeur: DASSAULT AUTOMATISMES ET TELECOMMUNICATIONS, F-78373 Plaisir Cédex (FR)
(72) Inventeur: Leblond, André, F-92410 Ville D'Avray (FR)
(74) Mandataire: Plaçais, Jean-Yves

(57) **Abrégé**

Dans une installation radiotéléphonique comprenant au moins une borne fixe reliée à un réseau de communication téléphonique prédéterminé et comportant au moins une voie radiofréquence-borne propre à assurer une intercommunication radioélectrique avec au moins une voie radiofréquence-poste d'un poste autonome, en cas de grandeur de qualité inférieure au seuil, les moyens de traitement-borne ou poste sont susceptibles d'imposer une correction de l'horloge de réception-borne ou poste.

## Description

L'invention concerne la radiotéléphonie.

Elle trouve une application particulière dans les téléphones sans fil de la seconde génération (CT2) tels que ceux proposés par l'opérateur FRANCE TELECOM sous la Marque déposée "POINTEL" ou "BI-BOP".

On connaît déjà des installations radiotéléphoniques qui comprennent au moins une borne fixe reliée à un réseau de communication téléphonique prédéterminé et comportant au moins une voie radiofréquence-borne propre à assurer une intercommunication radioélectrique avec au moins une voie radiofréquence-poste d'un poste autonome, ladite voie radiofréquence-borne ou poste comprenant :
- des moyens émetteurs-borne ou poste propres à émettre des données binaires à une fréquence d'émission-borne ou poste calée sur une horloge de référence-borne ou poste prédéterminée,
- des moyens récepteurs-borne ou poste propres à échantillonner des données binaires à une horloge de réception-borne ou poste dont la phase est asservie avec les transitions des données binaires reçues, les moyens émetteurs-borne ou poste et les moyens récepteurs-borne ou poste étant propres à assurer la transmission des données binaires selon un tramage temporel en alternat prédéterminé,
- des moyens de mesure-borne ou poste propres à mesurer une grandeur de qualité de la réception des données binaires, et à comparer périodiquement ladite grandeur à un seuil prédéterminé, et
- des moyens de traitement-borne ou poste propres, en présence d'une grandeur de qualité supérieure ou égale au seuil, à valider périodiquement l'asservissement de l'horloge de réception-borne ou poste pour corriger l'écart de phase entre ladite horloge de réception-borne ou poste et les transitions des données binaires reçues.

En présence d'une grandeur de qualité de réception inférieure au seuil signifiant que la réception des données est mauvaise, les moyens de traitement-borne ou poste ne valident plus l'asservissement de l'horloge de réception-borne ou poste, ce qui engendre une dérive de ladite horloge de réception-borne ou poste par rapport auxdites transitions des données binaires reçues.

Lorsque la grandeur de qualité de réception mesurée redevient supérieure ou égale au seuil, les moyens de traitement-borne ou poste reprennent la validation de l'asservissement de l'horloge de réception-borne ou poste pour corriger de nouveau l'écart de phase entre ladite horloge de réception-borne ou poste et les transitions des données binaires reçues.

En pratique, en cas de bonne réception, l'asservissement en phase est effectué automatiquement au début de la trame-réception, par exemple à chaque trame-réception, ledit asservissement étant terminé par un signal d'interruption adressé aux moyens de traitement-borne ou poste.

La valeur de l'asservissement en phase est fixe, par exemple 1/16ème de bit en cas de dérive ou 0. Le signe de l'asservissement est choisi selon le sens de la dérive déterminé par comparaison des fronts montants de l'horloge de réception-borne ou poste avec les fronts montants ou descendants des transitions des données binaires reçues.

Il est à remarquer que, dans le cas d'une dérive supérieure à un demi bit, la comparaison front à front peut conduire à une synchronisation décalée de l'horloge de réception-borne ou poste avec les transitions des données binaires reçues d'au moins un bit.

Un tel décalage a l'inconvénient d'engendrer inévitablement un traitement incorrect des données binaires reçues.

L'invention apporte une solution à ce problème.

Ainsi, l'invention vise à fournir une installation radiotéléphonique dans laquelle la dérive de l'horloge de réception--borne ou poste par rapport aux transitions des données binaires reçues est corrigée pour éviter le décalage d'un ou plusieurs bits en vue d'un traitement correct des données.

Selon une caractéristique essentielle de l'invention, ce résultat est obtenu en imposant une correction de l'horloge de réception-borne ou poste en cas de grandeur de qualité inférieure au seuil (c'est-à-dire lorsque la qualité de la réception des données est mauvaise).

En pratique, la correction imposée comprend une pluralité de corrections élémentaires imposées à une cadence choisie et dans un sens choisi.

Avantageusement, les paramètres de la correction imposée tels que la cadence et le sens sont déterminés en fonction des valeurs correctives élémentaires de l'asservissement en phase de ladite horloge de réception-borne ou poste effectuées en présence d'une grandeur de qualité supérieure ou égale au seuil et mémorisées au préalable pendant un nombre de trame de réception-borne ou poste prédéterminé.

En pratique, les paramètres de la correction imposée sont déterminés en fonction de la somme algébrique des valeurs correctives élémentaires de l'asservissement en phase ainsi préalablement mémorisées.

Selon un autre aspect de l'invention, la voie radiofréquence de la borne comprend en outre :
- des moyens radiofréquence-borne propres à moduler les données binaires émanant des moyens émetteurs-borne en signaux radiofréquence et à démoduler les signaux radiofréquence reçus en données binaires,
- des moyens audio-borne propres à coder et décoder bidirectionnellement la parole en données binaires et à traiter les données de signalisation,
- une interface ligne pour le raccordement des moyens audio-borne au réseau de communication téléphonique, et
- des moyens de contrôle-borne propres à assembler/désassembler sous forme de trames les données échangées entre les moyens de radiofréquence-borne, les moyens audio-borne et les moyens de traitement-borne, lesdits moyens de traitement borne étant propres à piloter les moyens de contrôle-borne.

Selon un mode de réalisation préféré de l'invention,la voie radiofréquence de chaque poste autonome comprend en outre :
- des moyens radiofréquence-poste propres à moduler les données binaires émanant des moyens émetteurs-poste en signaux radiofréquence et à démoduler les signaux radiofréquence reçus en données binaires,
- des moyens audio-poste propres à coder/décoder la parole en données binaires et à convertir/déconvertir les données binaires en données analogiques, et
- des moyens de contrôle-poste propres à assembler/désassembler sous forme de trames les données binaires échangées entre les moyens radiofréquence-poste, les moyens audio-poste et les moyens de traitement-poste, lesdits moyens de traitement-poste étant propres à piloter les moyens de contrôle-poste.

En pratique, en début de chaque trame de réception-borne ou poste, les moyens récepteurs-borne ou poste délivrent un signal d'interruption vers les moyens de traitement-borne ou poste en vue de signaler ledit début de trame de réception-borne ou poste.

Par ailleurs, en fin de chaque trame de réception-borne ou poste, les moyens de mesure-borne ou poste délivrent un signal d'interruption vers les moyens de traitement-borne ou poste lorsque la grandeur de qualité mesurée passe d'une valeur inférieure au seuil à une valeur supérieure au seuil et réciproquement.

De préférence, la fréquence de l'horloge de référence-borne est de 500 Hz et la fréquence de l'horloge de réception-borne ou poste asservie est de 72 kHz.

Avantageusement, l'horloge de référence-poste est l'horloge de réception-poste asservie.

Selon un mode de réalisation de l'invention, en cas de grandeur de qualité inférieure au seuil, chaque correction élémentaire de l'écart de phase imposée est de + ou - 1/16 bit pour une trame de réception-borne ou poste, et par exemple réalisée au début de ladite trame de réception-borne ou poste.

Selon un mode de réalisation de l'invention, en cas de bonne réception, la valeur d'un asservissement élémentaire en phase est de + ou - 1/16 bit ou 0 selon le sens et la valeur de la dérive.

Avantageusement, les moyens de traitement-borne ou poste sont propres à lire la valeur corrective courante de l'asservissement élémentaire en phase en réponse à un signal d'interruption, et à stocker la valeur ainsi lue.

D'autres caractéristiques et avantages de l'invention apparaîtront à la lumière de la description détaillée ci-après et des dessins dans lesquels :
- la figure 1 représente un synoptique schématique d'une installation de radiotéléphonie du genre POINTEL de l'art antérieur,
- la figure 2 représente un synoptique schématique d'une borne fixe radio de l'art antérieur,
- la figure 3 représente un synoptique schématique d'un poste autonome radio de l'art antérieur,
- la figure 4 représente schématiquement le tramage temporel en alternat des données binaires émises/reçues selon l'art antérieur,
- la figure 5 représente schématiquement les calages et asservissements des horloges émission et réception côté borne selon l'art antérieur,
- la figure 6 représente schématiquement les calages et asservissements des horloges émission et réception côté poste autonome selon l'art antérieur,
- la figure 7 illustre schématiquement les asservissements automatiques de l'horloge de réception borne ou poste sur les transitions des données binaires reçues en cas de grandeur de qualité supérieure ou égale au seuil conformément à l'art antérieur,
- la figure 8 illustre schématiquement la dérive de l'horloge de réception borne ou poste par rapport aux transitions des données binaires reçues en cas de grandeur de qualité inférieure au seuil conformément à l'art antérieur,
- la figure 9 illustre schématiquement la dérive de l'horloge de réception borne ou poste par rapport aux transitions des données binaires reçues en cas de grandeur de qualité inférieure au seuil et les asservissements automatiques de l'horloge de réception borne ou poste sur les transitions des données binaires reçues en cas de grandeur de qualité supérieure au seuil conduisant à un traitement correct des données conformément à l'art antérieur,
- la figure 10 illustre schématiquement la dérive de l'horloge de réception borne ou poste par rapport aux transitions des données binaires reçues en cas de grandeur de qualité inférieure au seuil et les asservissements automatiques de l'horloge de réception borne ou poste sur les transitions des données binaires reçues en cas de grandeur de qualité supérieure au seuil conduisant à un traitement incorrect des données conformément à l'art antérieur,
- la figure 11 illustre schématiquement les asservissements automatiques de l'horloge de réception borne ou poste sur les transitions des données binaires reçues en cas de grandeur de qualité supérieure au seuil conformément à l'art antérieur et la correction imposée en cas de grandeur inférieure au seuil selon l'invention,
- la figure 12 illustre schématiquement les asservissements automatiques à chaque trame de réception de l'horloge de réception borne ou poste sur les transitions des données binaires reçues en cas de grandeur de qualité supérieure au seuil conformément à l'art antérieur,
- la figure 13 illustre schématiquement les asservissements automatiques toutes les deux trames de réception de l'horloge de réception borne ou poste sur les transitions des données binaires reçues en cas de grandeur de qualité supérieure au seuil conformément à l'art antérieur,
- la figure 14 illustre schématiquement la mémorisation des valeurs correctives des asservissements pendant une durée prédéterminée selon l'invention,
- la figure 15 illustre schématiquement les asservissements automatiques à chaque trame interrompus par un gel de ces asservissements dans lequel sont imposées des corrections toutes les deux trames, suivi d'un dégel dans lequel sont réalisés des asservissements automatiques toutes les trames selon l'invention,
- la figure 16 illustre schématiquement les asservissements automatiques toutes les deux trames interrompus par un gel de ces asservissements dans lequel sont imposées des corrections suivi d'un dégel dans lequel sont réalisés des asservissements automatiques toutes les trames, puis des asservissements automatiques toutes les deux trames selon l'invention, et
- les figures 17 et 18 illustrent schématiquement le fonctionnement des moyens de traitement-borne ou poste selon l'invention.

Les dessins comportent pour l'essentiel des éléments de caractère certain. A ce titre, ils pourront non seulement servir à mieux faire comprendre la description détaillée ci-après mais aussi contribuer, le cas échéant, à la définition de l'invention.

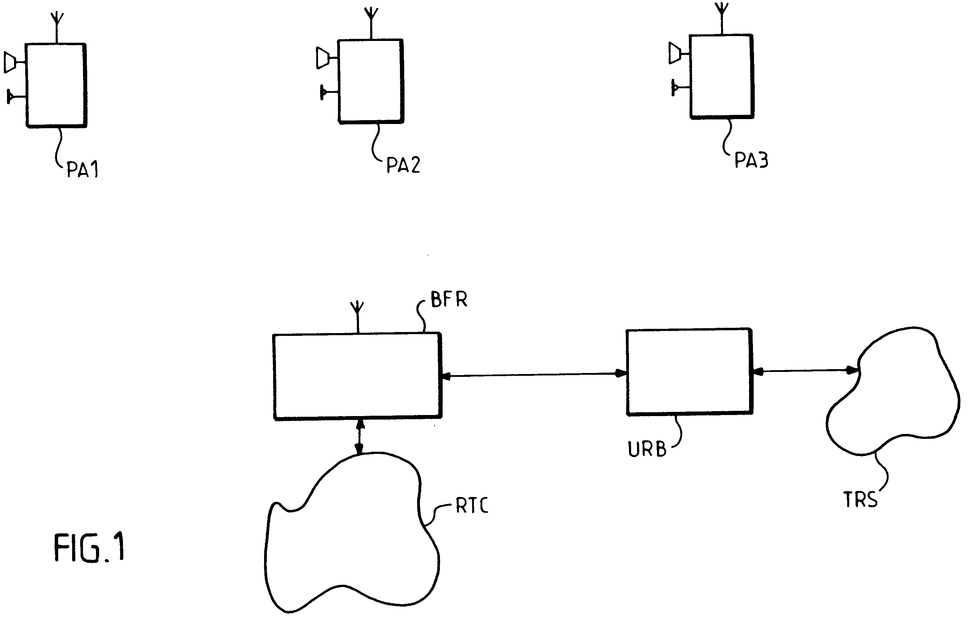

En référence à la figure 1, on va décrire très brièvement la structure connue d'une installation radiotéléphonique du type de celle comprenant des téléphones sans fil de la seconde génération (CT2) tels que ceux proposés par l'opérateur FRANCE TELECOM sous la Marque déposée "POINTEL" ou "BI-BOP".

Des postes autonomes PA, tels que des combinés téléphoniques portatifs, sont capables de coopération mutuelle à distance par canal radio avec au moins une borne fixe radio BFR. Les échanges radio entre les postes autonomes et la borne fixe sont régis selon une norme appelée "CAI" pour Common Air Interface.

La borne fixe BFR est reliée à une unité de raccordement de bornes URB capable de gérer une pluralité de bornes fixes BFR.

La borne fixe peut être directement connectée aux canaux téléphoniques du réseau téléphonique commuté RTC. Dans ce cas l'unité URB qui gère la borne BFR n'est pas raccordée à ces canaux.

Sur des canaux de signalisation numériques TRS, de fonctionnement par paquets, tel que le réseau TRANSPAC (marque déposée), sont raccordées les différentes unités de raccordement URB ainsi que d'autres constituants du réseau POINTEL (non représentés).

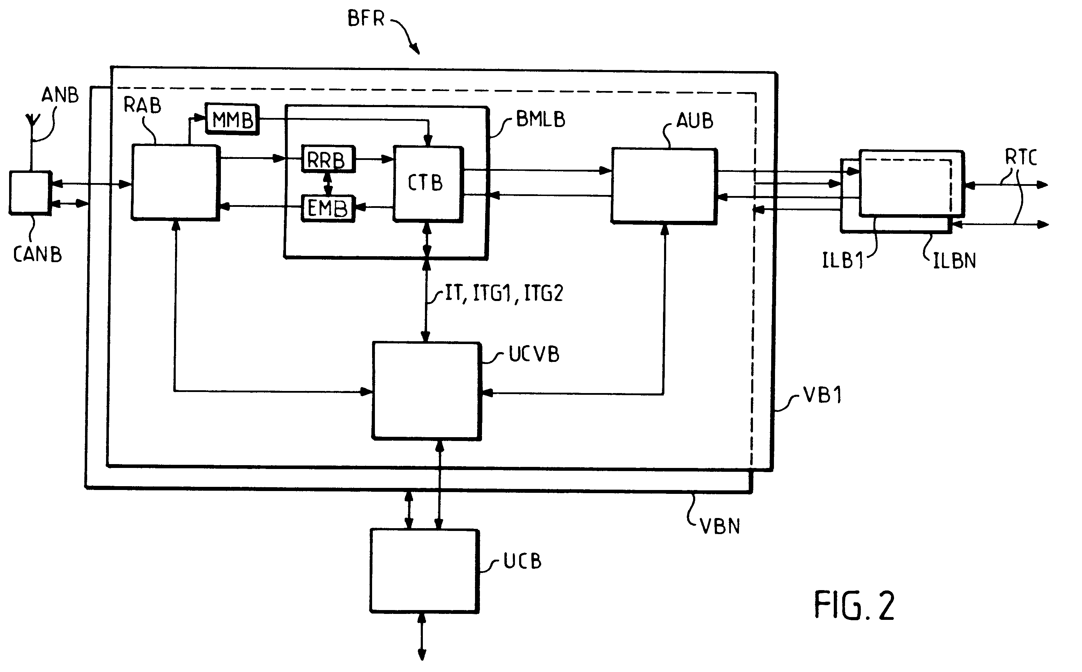

En référence à la figure 2, la borne BFR comporte une pluralité de voies radiofréquence VB individualisées en VB1 à VBN.

Une unité de contrôle UCB, commune à toutes les voies de la borne, est reliée à l'unité de raccordement URB qui gère la borne BFR.

En pratique, chaque voie radiofréquence comprend :
- un coupleur multi-voies CANB permettant le couplage des voies radio à une antenne ANB ;
- des moyens émetteurs-borne EMB propres à émettre des données binaires à une fréquence d'émission-borne calée sur une horloge de référence-borne prédéterminée ;
- des moyens récepteurs-borne RRB propres à échantillonner des données binaires à une horloge de réception-borne dont la phase est asservie avec les transitions des données binaires reçues ; les moyens émetteurs-borne EMB et les moyens récepteurs-borne RRB étant propres à assurer la transmission des données binaires selon un tramage temporel en alternat prédéterminé ;
- des moyens de mesure-borne MMB propres à mesurer une grandeur de qualité de la réception des données binaires et à comparer ladite grandeur à un seuil prédéterminé ; et
- des moyens de traitement-borne UCVB propres, en présence d'une grandeur de qualité supérieure ou égale au seuil, à valider périodiquement l'asservissement de l'horloge de réception-borne pour corriger l'écart de phase entre ladite horloge de réception-borne et les transitions des données binaires reçues ;
- des moyens radiofréquence RAB propres à moduler les données binaires émanant des moyens émetteurs-borne en signaux radiofréquence et à démoduler les signaux radiofréquence reçus en données binaires ;
- des moyens audio-borne AUB propres à coder et décoder bidirectionnellement la parole en données binaires ;
- une interface ligne ILB pour le raccordement des moyens audio-borne AUB au réseau de communication téléphonique RTC ;
- des moyens de contrôle-borne CTB propres à assembler/désassembler sous forme de trames les données échangées entre les moyens de radiofréquence-borne RAB, les moyens audio-borne AUB et les moyens de traitement-borne UCVB, lesdits moyens de traitement-borne UCVB étant propres à piloter les moyens de contrôle-borne CTB.

Avantageusement, les moyens EMB, RRB, CTB sont regroupés dans un bloc BMLB.

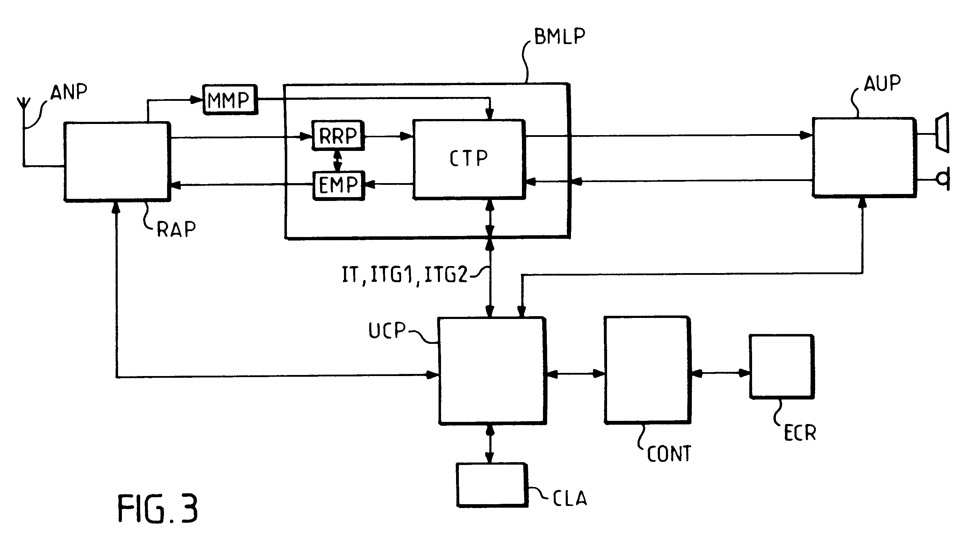

En référence à la figure 3, un poste autonome PA comprend :
- un dispositif d'antenne ANP,
- des moyens récepteurs-poste RRP propres à échantillonner des données binaires à une horloge de réception-poste dont la phase est asservie avec les transitions des données binaires reçues,
- des moyens émetteurs-poste EMP propres à émettre des données binaires à une fréquence d'émission-poste calée sur l'horloge de réception-poste, les moyens émetteurs-poste EMP et les moyens récepteurs-poste RRP étant propres à assurer la transmission des données binaires selon un tramage temporel en alternat prédéterminé,
- des moyens de mesure-poste MMP propres à mesurer une grandeur de qualité de la réception des données binaires et à comparer ladite grandeur à un seuil prédéterminé :
- des moyens de traitement-poste UCP propres à comparer périodiquement ladite grandeur à un seuil prédéterminé, et en présence d'une grandeur de qualité supérieure ou égale au seuil, à valider périodiquement l'asservissement de l'horloge de réception-poste pour corriger l'écart de phase entre l'horloge de réception-borne et les transitions des données binaires reçues,
- des moyens radiofréquence-poste propres à moduler les données binaires émanant des moyens émetteurs-poste en signaux radiofréquence et à démoduler les signaux radiofréquence reçus en données binaires,
- des moyens audio-poste AUP propres à coder/décoder la parole en données binaires, et à convertir/déconvertir les données binaires en données analogiques,
- des moyens de contrôle-poste CTP propres à assembler/désassembler sous forme de trames les données binaires échangées entre les moyens radiofréquence-poste CERP, les moyens audio-poste AUP et les moyens de traitement-poste UCP, lesdits moyens de traitement-poste UCP étant propres à piloter les moyens de contrôle-poste BMLP.

Des périphériques tels qu'un clavier CLA, un dispositif d'affichage ECR et son contrôleur CONT complètent l'environnement des moyens de traitement-poste UCP.

Avantageusement, les moyens EMP, RRP et CTP sont regroupés dans un bloc BMLP.

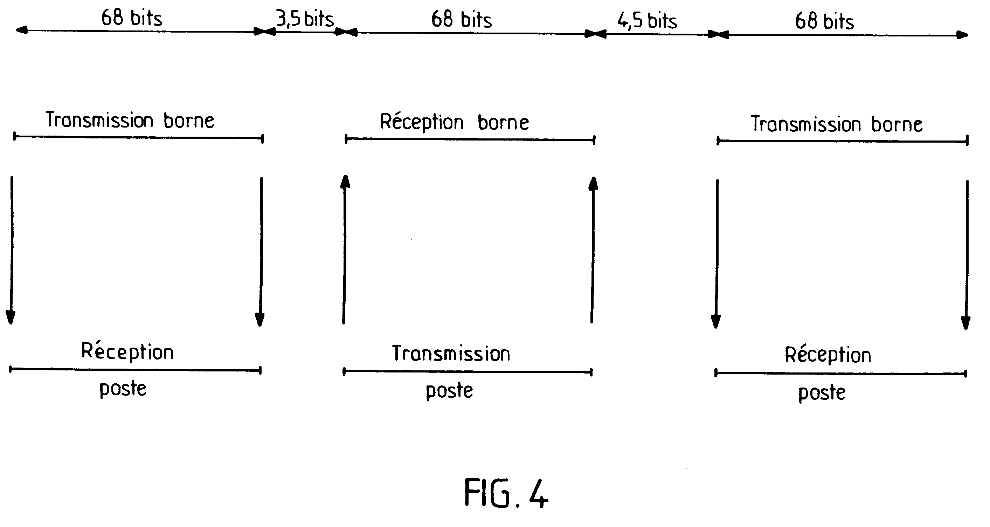

En référence à la figure 4, l'échange des données entre la borne fixe et un poste autonome s'effectue selon un tramage temporel en alternat applelé "ping pong" puisque lorsque la borne émet le poste reçoit et réciproquement.

En pratique, le débit binaire selon la norme CAI en multiplex 1.4 par exemple est de 144 bits toutes les 2 ms avec 68 bits pour l'émission d'une trame; 68 bits pour la réception d'une trame; 3,5 bits pour l'intervalle transmission/réception côté borne et 4,5 bits pour l'intervalle réception/transmission côté borne.

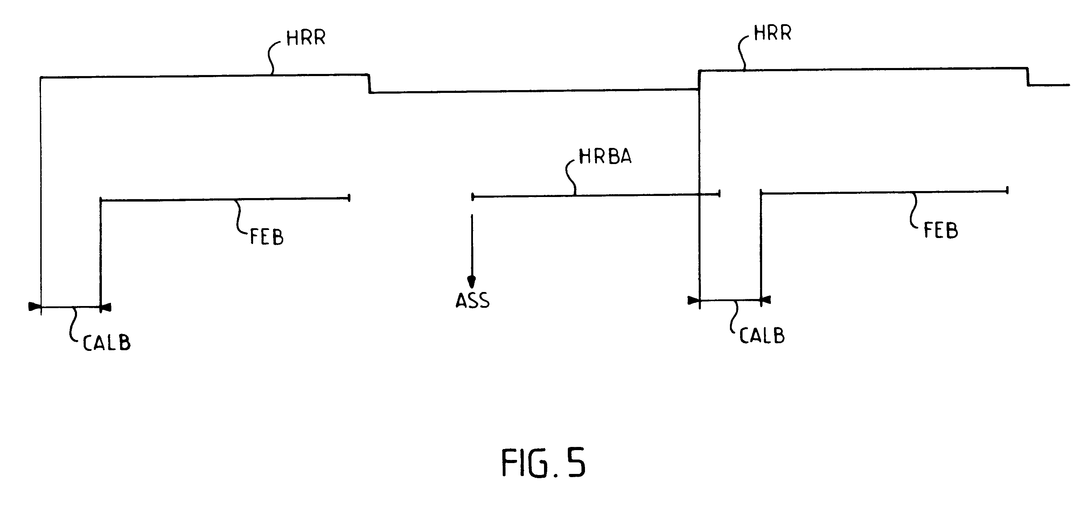

En référence à la figure 5, les moyens émetteurs-borne EMB émettent des données binaires à une fréquence d'émission-borne FEB calée sur une horloge de référence-borne HRR.

Par exemple, la fréquence de l'horloge de référence-borne HRR est de 500 Hz.

Le calage temporel CALB de la fréquence FEB sur l'horloge HRR est fixe et paramétrable.

Les moyens récepteurs-borne RRB échantillonnent des données binaires à une horloge de réception-borne HRBA dont la phase est asservie ASS avec les transitions des données binaires transmises à la fréquence de 72 kHz par exemple.

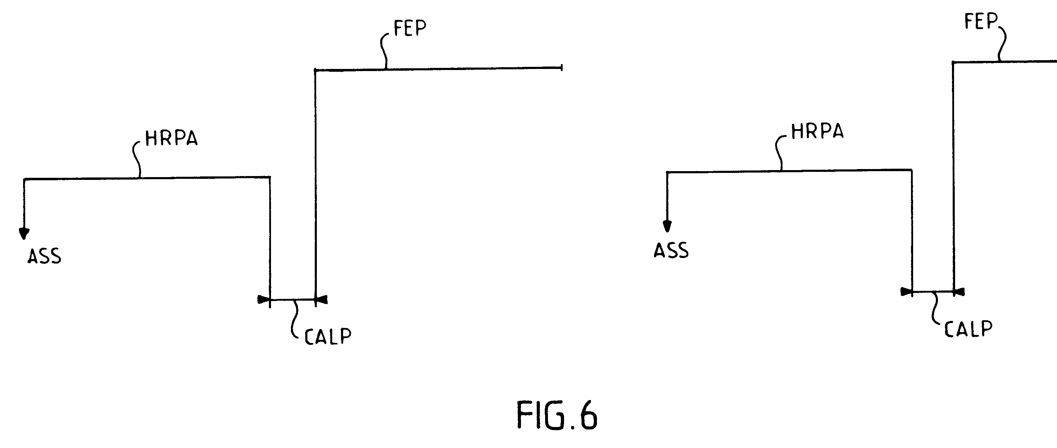

En référence à la figure 6, les moyens émetteurs-poste EMP émettent des données binaires à une fréquence d'émission-poste FEP calée sur l'horloge de réception-poste asservie HRPA.

Le calage temporel CALP de la fréquence FEP sur l'horloge HRPA est fixe et paramétrable.

Les moyens récepteurs-poste RRP échantillonnent des données binaires à une horloge de réception-poste HRPA dont la phase est asservie ASS avec les transitions des données binaires reçues transmises à la fréquence de 72 kHz.

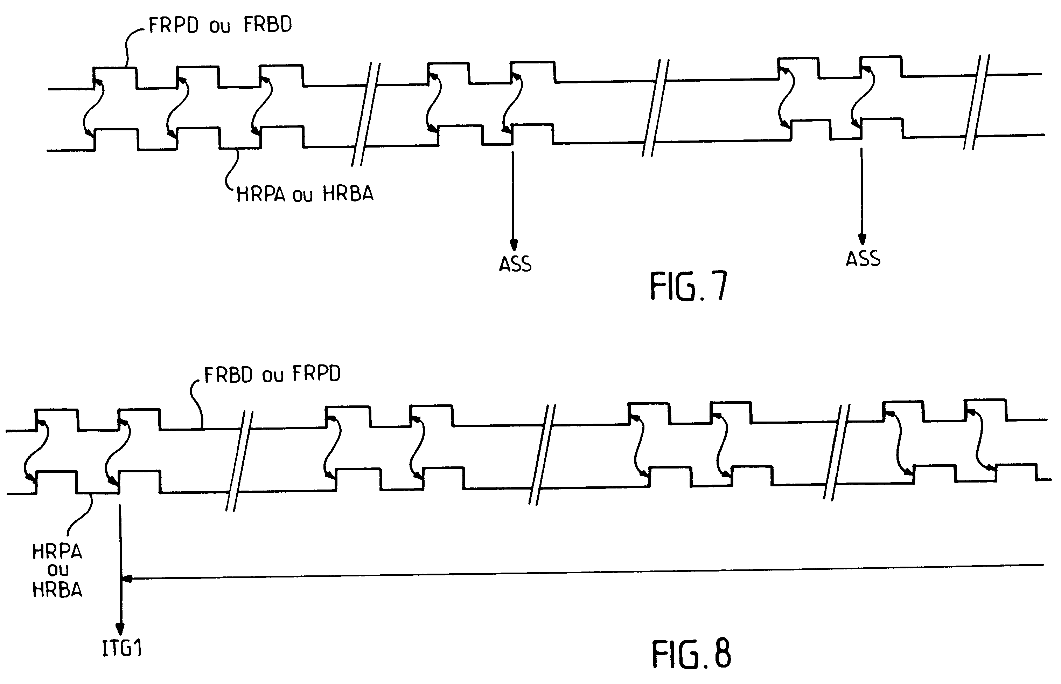

En référence à la figure 7, les asservissements périodiques et automatiques ASS de l'horloge de réception borne ou poste HRBA ou HRPA s'effectuent sur les transitions des données binaires reçues en cas de grandeur de qualité supérieure au seuil pour corriger l'éventuel écart de phase entre ces deux signaux.

Il est à remarquer que les données binaires sont émises à une fréquence FEPD ou FEBD correspondant à la fréquence d'émission-poste ou borne FEP ou FEB des moyens émetteurs-poste ou borne EMP ou EMB décalée d'un temps dû à la traversée des moyens radiofréquence-poste ou borne en émission. De même, les fréquences FRPD ou FRBD des données reçues aux entrées des blocs BMLP ou BMLB, correspondent aux fréquences FEBD ou FEPD décalées d'un temps dû à la traversée des moyens radiofréquence-poste ou borne en réception.

En pratique, la correction de l'écart de phase lorsque la réception des données est bonne, est effectuée périodiquement au début de la trame-réception, par exemple à chaque trame-réception.

La valeur d'un asservissement élémentaire de phase périodique ASS est fixe, par exemple 1/16ème de bit en cas de dérive ou 0. Le signe de cet asservissement élémentaire est choisi selon le sens de la dérive qui est déterminé par comparaison des fronts montants de l'horloge de réception-borne ou poste avec les fronts montants ou descendants des transitions binaires reçues.

En référence à la figure 8, en cas de mauvaise réception, la dérive de l'horloge de réception borne ou poste par rapport aux transitions des données binaires reçues peut être importante.

En effet, en présence d'une grandeur de qualité inférieure au seuil signifiant que la réception des données est mauvaise, les moyens de traitement-borne ou poste ne valident plus ou "gèlent" l'asservissement élémentaire et périodique ASS de l'horloge, ce qui engendre une dérive de l'horloge de réception-borne ou poste par rapport auxdites transitions des données binaires reçues.

Il est à remarquer qu'en fin de trame de réception, les moyens de mesure-borne ou poste sont susceptibles de délivrer un signal d'interruption ITG1 au profit des moyens de traitement-borne ou poste pour signaler un instant où la qualité de réception devient mauvaise et qu'il convient alors de geler l'asservissement périodique de l'horloge de réception. Ce gel dure tant que la qualité de réception reste mauvaise.

De même, en fin de trame de réception, les moyens de mesure-borne ou poste sont susceptibles de délivrer un signal d'interruption ITG2 au profit des moyens de traitement-borne ou poste pour signaler un instant où la qualité de réception devient bonne et qu'il convient alors de dégeler l'asservissement périodique de l'horloge de réception. Ce dégel dure tant que la qualité de réception reste bonne.

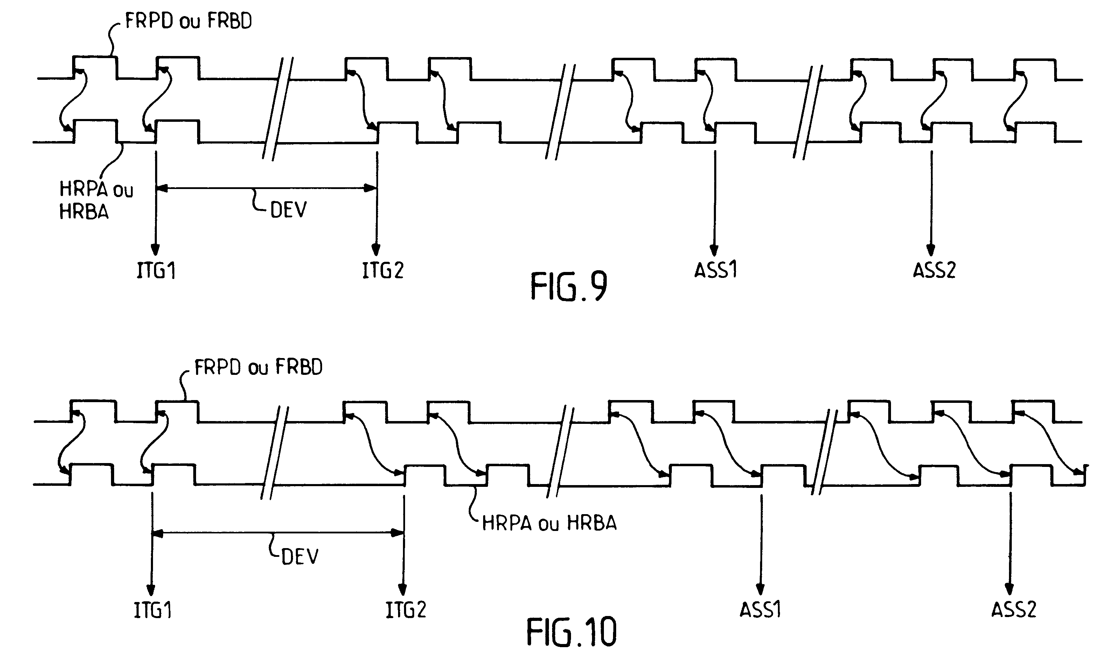

En référence à la figure 9, la dérive de l'horloge de réception borne ou poste par rapport aux transitions des données binaires reçues en cas de grandeur de qualité inférieure au seuil se produit entre ITG1 et ITG2 indiquant aux moyens de traitement borne ou poste respectivement un gel et un dégel de l'asservissement élémentaire et périodique ASS.

En cas de grandeur de qualité supérieure au seuil, c'est à dire après ITG2, les moyens de traitement borne ou poste reprennent la validation de l'asservissement ASS avec un premier asservissement ASS1 et un dernier asservissement ASS2 pour l'opération de rattrapage de la dérive.

Le résultat des asservissements élémentaires ASS1 à ASS2 est ici satisfaisant dans la mesure où la resynchronisation de l'horloge de réception avec les transitions des données binaires compense la dérive.

En référence à la figure 10, on retrouve la dérive DEV décrite en référence à la figure 9.

Le résultat des asservissements élémentaires ASS1 à ASS2 est ici mauvais dans la mesure où la resynchronisation de l'horloge de réception avec les transitions des données binaires ne compense pas la dérive.

En effet, dans le cas d'une dérive supérieure à un demi bit, la comparaison front à front conduit ici à une synchronisation décalée de l'horloge de réception-borne avec les transitions des données binaires reçues d'au moins un bit.

Un tel décalage engendre inévitablement un traitement incorrect des données binaires reçues.

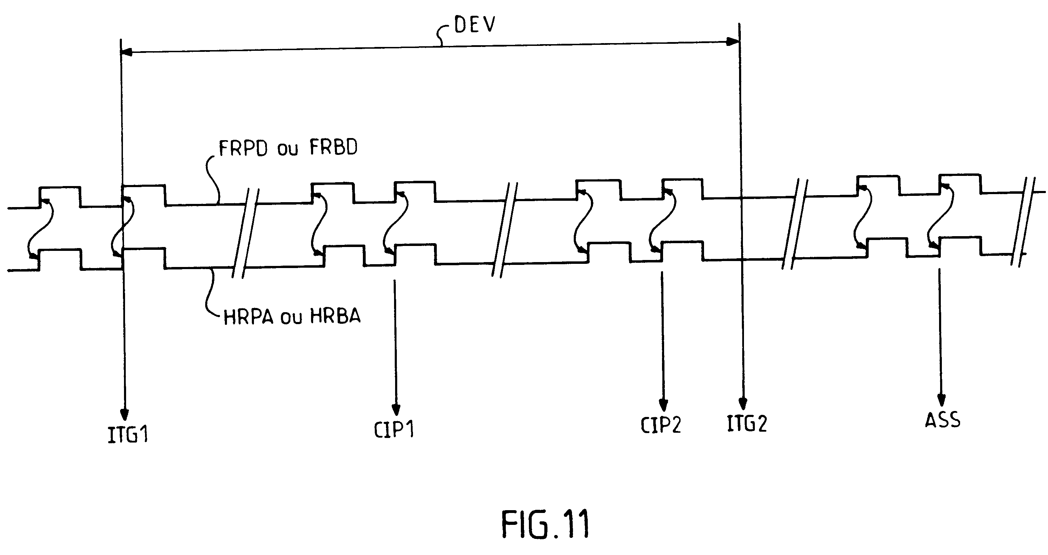

En référence à la figure 11, on retrouve la dérive DEV décrite en référence aux figures 9 et 10.

Pour apporter une solution au problème de décalage mentionné ci-avant, il est prévu d'imposer une correction élémentaire et périodique CIP1 à CIP2 en cas de grandeur inférieure au seuil, c'est à dire pendant l'intervalle ITG1 à ITG2.

En pratique, la correction imposée comprend une pluralité de corrections CIP élémentaires effectuées à une cadence choisie FT et dans un sens choisi.

Avantageusement, les paramètres des corrections élémentaires imposées CIP1 à CIP2 sont choisis en fonction des valeurs correctives élémentaires de l'asservissement en phase ASS de ladite horloge de réception-borne ou poste effectuées lorsque la grandeur de qualité est supérieure ou égale au seuil et mémorisées au préalable pendant un nombre de trames de réception borne ou poste prédéterminé .

En pratique, les paramètres des corrections élémentaires imposées sont choisis en fonction de la somme algébrique des valeurs correctives élémentaires de l'asservissement en phase ainsi préalablement mémorisées.

Après le dégel (c'est-à-dire après ITG2), les moyens de traitement reprennent la validation de l'asservissement périodique et automatique ASS.

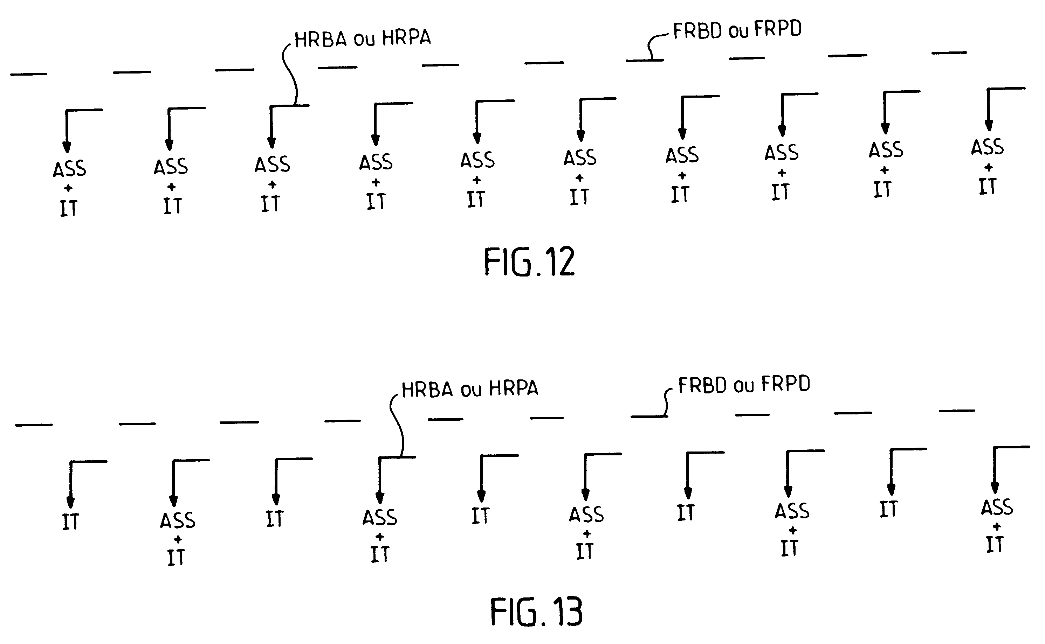

En référence à la figure 12, les asservissements élémentaires et automatiques ASS sont réalisés à chaque trame réception de l'horloge de réception borne ou poste sur les transitions des données binaires reçues en cas de grandeur de qualité supérieure au seuil.

En pratique, l'asservissement élémentaire ASS est terminé par un signal d'interruption IT émis au profit des moyens de traitement.

Ce message d'interruption s'effectue ici en début de chaque trame réception.

En référence à la figure 13, les asservissements élémentaires et automatiques ASS sont réalisés toutes les deux trames réception de l'horloge de réception borne ou poste (AT=2).

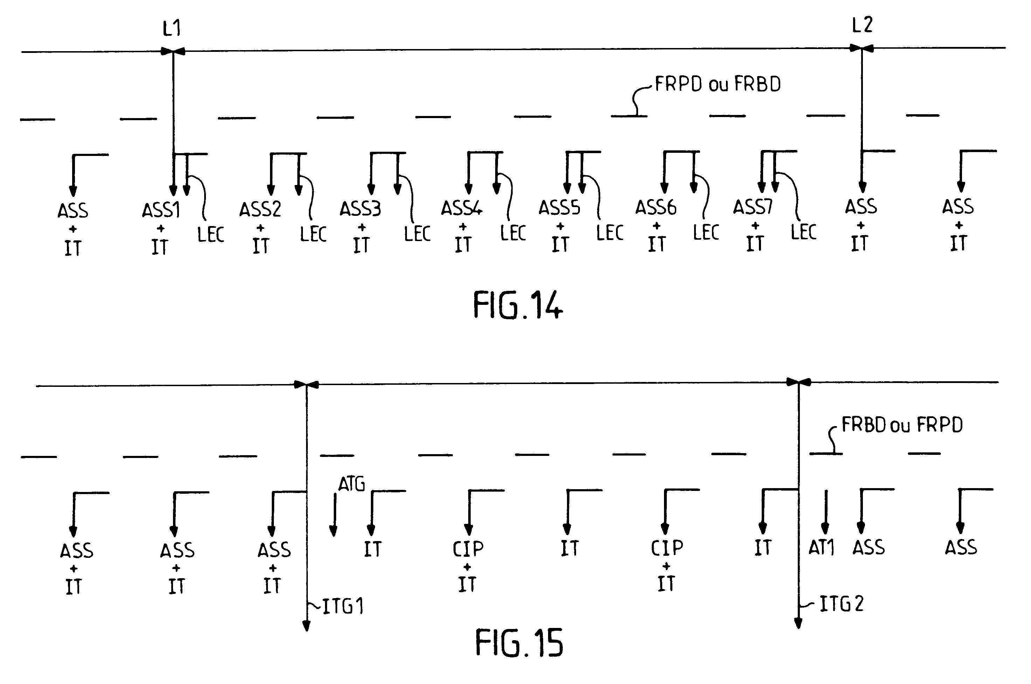

En référence à la figure 14, la mémorisation des valeurs correctives des asservissements élémentaires ASS1 à ASS7 s'effectue pendant une durée prédéterminée, ici pendant 7 trames réception entre L1 et L2.

Cette mémorisation consiste à lire LEC la valeur de l'asservissement élémentaire ASS après le signal d'interruption IT engendré après chaque asservissement élémentaire ASS.

Ce sont les moyens de traitement qui lisent cette valeur ASS en réponse au signal IT.

Il est à remarquer que dans cet exemple selon l'invention, les asservissements élémentaires ASS1 et ASS7 sont réalisés et lus à chaque trame réception (AT=1).

En référence à la figure 15, les asservissements périodiques ASS réalisés à chaque trame sont interrompus par un gel ITG1 et sont suivis de corrections imposées périodiques selon l'invention, elles-mêmes interrompues par un dégel ITG2 suivi d'asservissements automatiques toutes les trames .

Dans cet exemple, les corrections imposées CIP sont réalisées pendant le gel (ici entre ITG1 et ITG2) toutes les deux trames de réception selon l'invention.

C'est grâce à un message ATG prédéterminé émanant des moyens de traitement après le signal d'interruption ITG1 que cette correction imposée s'effectue ici toutes les deux trames et dans le sens spécifié par le message ATG.

La génération du message ATG s'effectue de la façon suivante. Le message ATG est programmé dans un registre appartenant aux moyens de controle poste ou borne CTP ou CTB.

Il spécifie le sens et la cadence FT des corrections élémentaires imposées CIP pendant une période de gel.

Le message AT1 est généré d'une manière sensiblement similaire. Il indique la cadence des asservissements élémentaires (toutes les trames pour AT1).

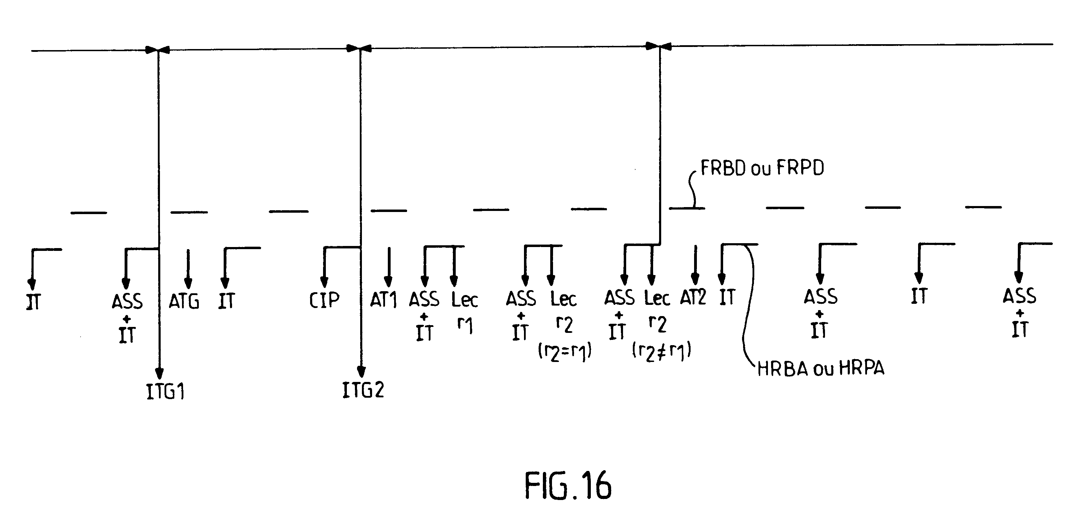

En référence à la figure 16, les asservissements automatiques ASS sont d'abord réalisés toutes les deux trames (avant ITG1), un gel est réalisé (entre ITG1 et ITG2) avec des corrections élémentaires imposées CIP toutes les deux trames dans le sens indiqué par ATG, puis des asservissements élémentaires et automatiques ASS sont réalisés toutes les trames AT1 comme spécifié par le message AT1 et enfin toutes les deux trames comme spécifié par le message AT2.

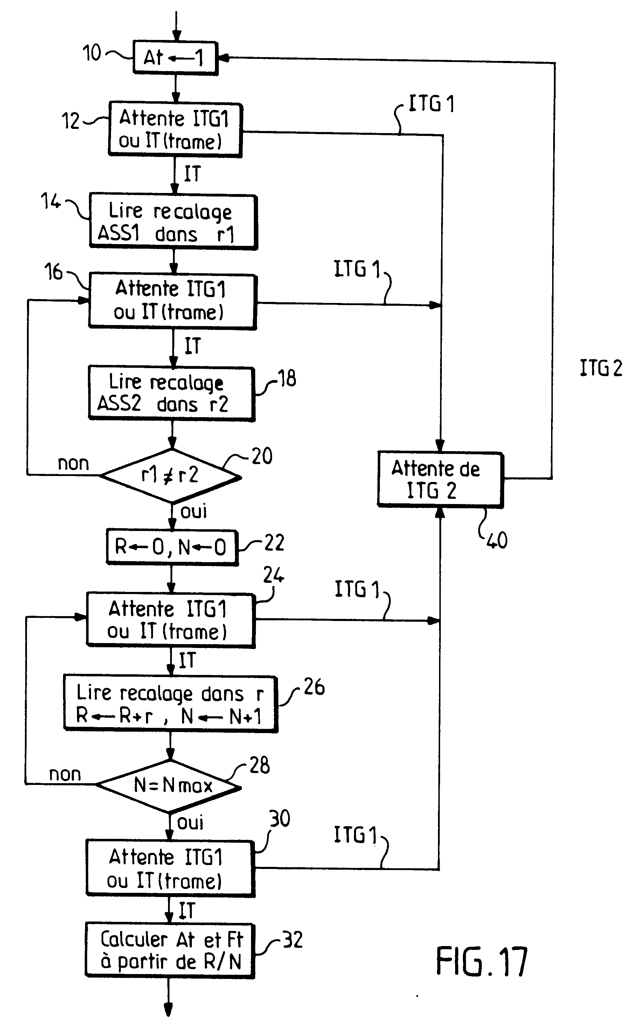

En référence à la figure 17, le fonctionnement des moyens de traitement-borne au poste pour acquérir les valeurs correctives est le suivant.

En premier lieu (étape 10), les moyens de traitement-borne ou poste initialisent la cadence AT des asservissements élémentaires ASS à 1, c'est-à-dire pour toutes les trames de réception.

Dans l'étape 12, les moyens de traitement-borne ou poste sont en attente d'un signal d'interruption ITG1 signalant le gel de l'asservissement ou d'un signal IT signalant le début de la trame courante.

Lors de l'étape 14, en présence d'un signal IT indiquant le début d'une trame, il est prévu de lire la valeur de l'asservissement ASS1 et de stocker la valeur ainsi lue dans un registre r1 pour la trame courante (r1 est égal ici à -1/16 bit, 0 ou +1/16 bit) (figure 16).

Lors de l'étape 16, les moyens de traitement-borne ou poste sont en attente d'un signal IT ou d'un signal ITG1.

Lors de l'étape 18, en présence d'un signal IT signalant la trame suivante, il est prévu de lire la valeur de l'asservissement ASS2 et de stocker la valeur ainsi lue dans un registre r2 pour la trame suivante (figure 16).

Lors de l'étape 20, il est prévu de comparer les valeurs des registres r1 et r2.

En cas de comparaison positive, il est prévu de revenir à l'étape 16. Cette comparaison positive signifie que l'asservissement élémentaire ASS1 de la trame courante est identique à l'asservissement élémentaire ASS2 de la trame suivante.

En cas de comparaison négative, il est prévu de passer à l'étape 22 dans laquelle deux variables R et N sont initialisées à 0.

Lors de l'étape 24, les moyens de traitement-borne ou poste sont en attente d'un signal IT ou d'un signal ITG1.

En présence d'un signal IT (étape 26), il est prévu d'incrémenter la variable N de 1, et d'incrémenter la variable R de r, r étant la valeur de l'asservissement.

Lors de l'étape 28, la variable N est comparée à un seuil prédéterminé correspondant au nombre de trames relatif à la durée de la lecture L1-L2 décrite en référence à la figure 14.

En cas de comparaison négative, il est prévu de revenir à l'étape 24, tandis qu'en cas de comparaison positive, il est prévu de passer à l'étape 30.

Lors de l'étape 30, les moyens de traitement-borne ou poste sont en attente d'un signal IT ou ITG1.

Lors de l'étape 32, en présence d'un signal IT, il est prévu de calculer la cadence AT des asservissements élémentaires ASS et FT la cadence des corrections élémentaires imposées pendant une période de gel.

Le calcul de AT et de FT est fonction du rapport R/N correspondant au rapport entre la somme algébrique des asservissements élémentaires et périodiques ASS et le nombre de trames de la période de lecture L1-L2.

La valeur du rapport R/N permet de déterminer les AT et FT optimaux.

En pratique, AT est une valeur entière 1, 2, 3, 4,... strictement inférieure à R/N.

En ce qui concerne FT, il s'agit d'un nombre entier, le plus proche de R/N.

Par exemple, si R/N = 7,8, alors FT = 8.

Si R/N = 16, alors FT = 16.

Une correction élémentaire imposée CIP de période FT a par exemple comme valeur +1/16 bit ou -1/16 bit.

Il est à remarquer qu'en présence d'un signal ITG1 indiquant le gel des asservissements à cause de la mauvaise qualité de réception des données (étapes 12, 16, 24 et 30), il est prévu (étape 40) d'attendre un signal ITG2 indiquant le dégel (bonne réception).

En présence d'un signal ITG2, il est prévu de revenir à l'étape 10.

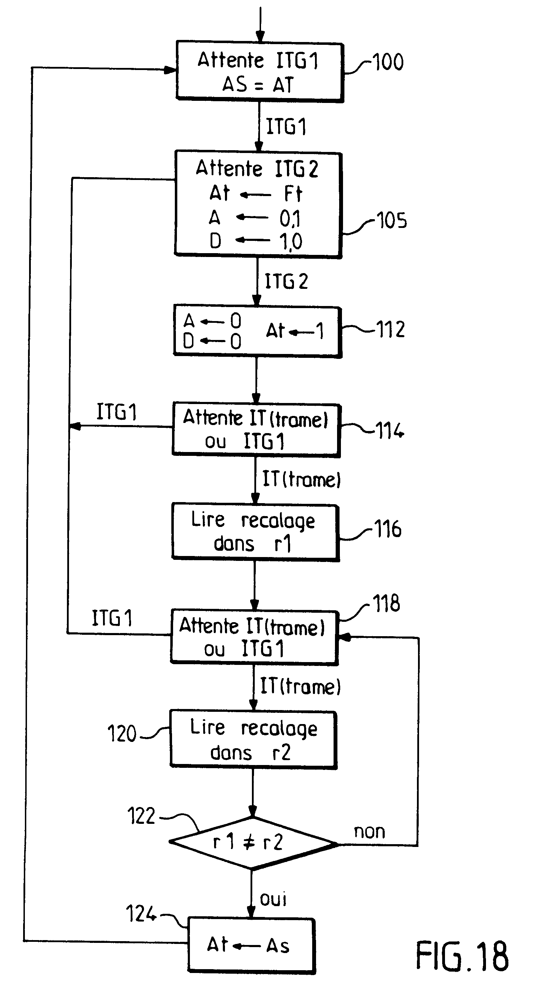

Après cette période de lecture et le calcul de R/N, il est prévu d'effectuer des corrections imposées en cas de gel selon l'invention (figure 18).

Lors de l'étape 100, les moyens de traitement-borne ou poste sont en attente d'un signal ITG1.

Pendant cette attente, les moyens de traitement-borne ou poste valident les asservissements élémentaires et périodiques ASS, avec la sauvegarde de AT dans une variable AS.

Lors de l'étape 105, les moyens de traitement borne ou poste sont en attente d'un signal ITG2. Ils positionnent les variables A pour avance et D pour retard relatives aux corrections imposées CIP. C'est le message ATG qui indique le sens A ou D et le nombre FT de trames. En pratique, FT est copié dans AT. Selon le sens de la correction, les variables A et D sont positionnées à 0 ou à 1.

En présence d'un signal ITG2 indiquant le dégel des asservissements périodiques ASS, il est prévu de revenir à AT = 1 (étape 112) et de positionner les variables A et D à 0.

Lors de l'étape 114, les moyens de traitement-borne ou poste sont en attente d'un signal IT ou ITG1.

En présence d'un signal IT (étape 116), il est prévu de lire la valeur de l'asservissement ASS et de stocker ladite valeur dans le registre r1.

Lors de l'étape 118, les moyens de traitement-borne ou poste sont en attente d'un signal IT ou ITG1.

En présence d'un signal IT (étape 120), il est prévu de lire la nouvelle valeur de l'asservissement ASS et de stocker ladite valeur dans le registre r2.

Lors de l'étape 122, il est prévu de comparer les valeurs r1 et r2.

En cas de comparaison négative, il est prévu de revenir à l'étape 118, tandis qu'en cas de comparaison positive, il est prévu d'initialiser à nouveau la variable AT à la valeur AS de sauvegarde.

## Revendications

1. Installation radiotéléphonique comprenant au moins une borne fixe (BFR) reliée à un réseau de communication téléphonique prédéterminé (RTC) et comportant au moins une voie radiofréquence-borne (VB) propre à assurer une intercommunication radioélectrique avec au moins une voie radiofréquence-poste d'un poste autonome (PA), ladite voie radiofréquence--borne ou poste comprenant:
- des moyens émetteurs-borne (EMB) ou poste (EMP) propres à émettre des données binaires à une fréquence d'émission-borne (FEB) ou poste (FEP) calée sur une horloge de référence-borne (HRR) ou poste (HRPA) prédéterminée,
- des moyens récepteurs-borne (RRB) ou poste (RRP) propres à échantillonner des données binaires à une horloge de réception-borne (HRBA) ou poste (HRPA) dont la phase est asservie avec les transitions des données binaires reçues, les moyens émetteurs-borne (EMB) ou poste (EMP) et les moyens récepteurs-borne (RRB) ou poste (RRP) étant propres à assurer la transmission des données binaires selon un tramage temporel en alternat prédéterminé,
- des moyens de mesure-borne (MMB) ou poste (MMP) propres à mesurer une grandeur de qualité de la réception des données binaires, et à comparer ladite grandeur à un seuil prédéterminé, et
- des moyens de traitement-borne (UCVB) ou poste (UCP) propres en présence d'une grandeur de qualité supérieure ou égale au seuil, à valider périodiquement, l'asservissement de l'horloge de réception-borne ou poste (HRBA ou HRPA) pour corriger l'écart de phase entre ladite horloge de réception--borne et les transitions des données binaires reçues,
caractérisée en ce qu'en cas de grandeur de qualité inférieure au seuil, les moyens de traitement-borne (UCVB) ou poste (UCP) sont susceptibles d'imposer une correction (CIP) de l'horloge de réception-borne ou poste.

2. Installation selon la revendication 1, caractérisée en ce que la correction imposée (CIP) de l'horloge de réception--borne ou poste comprend une pluralité de corrections élémentaires effectuées à une cadence choisie (FT) et dans un sens choisi.

3. Installation selon la revendication 1 ou 2, caractérisée en ce que les paramètres de la correction imposée tels que la cadence (FT) et le sens sont déterminés en fonction des valeurs correctives élémentaires de l'asservissement en phase (ASS) de ladite horloge de réception-borne ou poste effectuées lorsque la grandeur de qualité est supérieure ou égale au seuil et mémorisées au préalable pendant un nombre de trames de réception-borne ou poste prédéterminé.

4. Installation selon la revendication 3, caractérisée en ce que les paramètres de la correction imposée (CIP) sont déterminés en fonction de la somme algébrique des valeurs correctives élémentaires de l'asservissement en phase (ASS) ainsi préalablement mémorisées.

5. Installation selon l'une des revendications précédentes, caractérisée en ce que la voie radiofréquence de la borne comprend en outre :
- des moyens radiofréquence-borne (RAB) propres à moduler les données binaires émanant des moyens émetteurs-borne (EMB) en signaux radiofréquence et à démoduler les signaux radiofréquence reçus en données binaires,
- des moyens audio-borne (AUB) propres à coder et décoder bidirectionnellement la parole en données binaires,
- une interface ligne (ILB) pour le raccordement des moyens audio-borne (AUB) au réseau de communication téléphonique (RTC), et
- des moyens de contrôle-borne (CTB) propres à assembler/désassembler sous forme de trames les données échangées entre les moyens radiofréquence-borne, les moyens-audio-borne (AUB) et les moyens de traitement-borne (UCVB), lesdits moyens de traitement-borne (UCVB) étant propres à piloter les moyens de contrôle-borne (BMLB).

6. Installation selon l'une des revendications précédentes, caractérisée en ce que la voie radiofréquence-poste comprend en outre:
- des moyens radiofréquence-poste (RAP) propres à moduler les données binaires émanant des moyens émetteurs-poste (EMP) en signaux radiofréquence et à démoduler les signaux radiofréquence reçus en données binaires,
- des moyens audio-poste (AUP) propres à coder/décoder la parole en données binaires, à convertir/déconvertir les données binaires en données analogiques, et
- des moyens de contrôle-poste (CTP) propres à assembler/désassembler sous forme de trames les données binaires échangées entre les moyens radiofréquence-poste (RAP), les moyens audio-poste (AUP) et les moyens de traitement-poste (UCP), lesdits moyens de traitement-poste (UCP) étant propres à piloter les moyens de contrôle-poste (CTP).

7. Installation selon l'une des revendications précédentes, caractérisée en ce qu'en début de chaque trame de réception--borne ou poste, les moyens récepteurs-borne ou poste délivrent un signal d'interruption (IT) vers les moyens de traitement-borne ou poste (UCVB ou UCP) en vue de signaler ledit début de trame de réception-borne ou poste.

8. Installation selon l'une des revendications précédentes, caractérisée en ce qu'en fin de chaque trame de réception--borne ou poste, les moyens de mesure-borne ou poste sont susceptibles de délivrer un signal d'interruption (ITG1 ou ITG2) vers les moyens de traitement-borne ou poste (UCVB ou UCP) lorsque la grandeur de qualité mesurée passe d'une valeur inférieure au seuil à une valeur supérieure au seuil et réciproquement.

9. Installation selon l'une des revendications précédentes, caractérisée en ce que la fréquence de l'horloge de référence-borne (HRR) est de 500 Hz.

10. Installation selon l'une des revendications précédentes, caractérisée en ce que l'horloge de référence-poste est l'horloge de réception-poste asservie (HRPA).

11. Installation selon l'une des revendications précédentes, caractérisée en ce que la fréquence de l'horloge de réception-borne asservie (HRBA) est de 72 kHz.

12. Installation selon l'une des revendications précédentes, caractérisée en ce qu'en cas de grandeur de qualité inférieure au seuil, chaque correction élémentaire de l'écart de phase imposée (CIP) est de + ou - 1/16 bit.

13. Installation selon la revendication 12, caractérisée en ce qu'en cas de mauvaise réception, la correction élémentaire de l'écart de phase (CIP) est imposée au début de la trame de réception-borne ou poste.

14. Installation selon l'une des revendications précédentes, caractérisée en ce qu'en cas de grandeur de qualité supérieure ou égale au seuil, la valeur d'un asservissement élémentaire (ASS) en phase est de + ou - 1/16 bit ou 0 selon le sens et la valeur de la dérive.

15. Installation selon la revendication 14, caractérisée en ce que l'asservissement en phase est effectué au début de la trame de réception-borne ou poste et terminé par un signal d'interruption (IT) à l'égard des moyens de traitement-borne ou poste.

16. Installation selon la revendication 15, caractérisée en ce que les moyens de traitement-borne ou poste (UCVB ou UCVP) sont propres à lire la valeur corrective courante de l'asservissement élémentaire en réponse au signal d'interruption et à stocker la valeur ainsi lue.
